(19) Europäisches Patentamt

European Patent Office

Office européen des brevets

(11) **EP 1 354 918 B1**

(12) **EUROPEAN PATENT SPECIFICATION**

(45) Date of publication and mention
of the grant of the patent:
**08.03.2006 Bulletin 2006/10**

(51) Int Cl.:
*C09D 4/06* (2006.01)      *C08J 7/16* (2006.01)
*B32B 27/30* (2006.01)

(21) Application number: **03008094.9**

(22) Date of filing: **15.04.2003**

(54) **Curable resin composition, method for manufacture of laminate using the composition, transfer material, method for manufacture thereof and transferred product**

Härtbare Harzzusamensetzung, Verfahren zur Herstellung von Laminat daraus, Transfermaterial, Verfahren zur Herstellung daraus und Transfermaterial

Composition de résine durcissable, méthode pour la fabrication d'un laminé à partir de cette composition, matériau de transfert, méthode pour leur fabrication et produit transféré

(84) Designated Contracting States:
**DE FR GB IT NL**

(30) Priority: **18.04.2002 JP 2002116333**
**18.04.2002 JP 2002116374**

(43) Date of publication of application:
**22.10.2003 Bulletin 2003/43**

(73) Proprietor: **KURARAY CO., LTD.**
**Kurashiki-shi,**
**Okayama 710-8622 (JP)**

(72) Inventors:
• **Kitano, Takahiro**
**Tsukuba-shi,**
**Ibaraki 305-0841 (JP)**
• **Suzuki, Hirokazu**
**Tsukuba-shi,**
**Ibaraki 305-0841 (JP)**
• **Kubo, Keiji**
**Tsukuba-shi,**
**Ibaraki 305-0841 (JP)**
• **Ogushi, Masayasu**
**Tsukuba-shi,**
**Ibaraki 305-0841 (JP)**
• **Terada, Kazutoshi**
**Kurashiki-shi,**
**Okayama 710-8622 (JP)**
• **Kawabata, Tsuneo,**
**Oike Laboratories Co., Ltd.**
**Kyoto-shi,**
**Kyoto 612-8418 (JP)**
• **Kojima, Masaki,**
**Nippon Fine Chemical Co., Ltd.**
**Kakogawa-shi,**
**Hyogo 675-0011 (JP)**

(74) Representative: **Müller-Boré & Partner**
**Patentanwälte**
**Grafinger Strasse 2**
**81671 München (DE)**

(56) References cited:
**EP-A- 0 844 286          US-A- 5 489 359**

• **DATABASE WPI Section Ch, Week 197750 Derwent Publications Ltd., London, GB; Class A18, AN 1977-88808Y XP002246609 & JP 52 129750 A (TOYO INK MFG CO), 31 October 1977 (1977-10-31)**

**Description**

The present invention relates to a curable resin composition and to a method for the manufacture of a laminate using the composition, more specifically to a curable resin composition demonstrating excellent thermal adhesiveness after curing and a method for the manufacture of a laminate using such a composition. Furthermore, the present invention also relates to a transfer material comprising a release base film and a transfer layer provided thereon, to a method for the manufacture of the transfer material, and to a transferred product, more specifically to a transfer material in which a transfer layer comprising a cured resin layer having both the hard coat function and the thermal transfer function at the same time is provided on a release base film, to a transfer material comprising a homogeneous cured resin layer which is free of "cissing", and "pinholes", even in the cases when "cissing" and "pinholes" are easily induced during coating of a typical photocurable resin composition on the surface of the release base film itself or the processed surface thereof, to a method for the manufacture of such transfer materials, and to a transfer product obtained from those transfer materials.

Adhesive layers used in laminated materials are usually formed by coating a thermoplastic resin on a laminate substrate material. During coating, the thermoplastic resin has to be melted to reduce the viscosity thereof. In this case, in order to facilitate coating, a viscosity-reducing agent such as wax is added to the thermoplastic resin and the melt viscosity is decreased. The problem is, however, that the adhesive strength of the adhesive layer that was formed is decreased.

To resolve this problems a hot-melt resin composition has been suggested (Japanese Patent Application Laid-open S52-129750) in which a photocurable monomer was added as a viscosity-reducing curing agent to a thermosetting resin, this resin composition having a sufficiently low melt viscosity, though no viscosity-reducing agent such as wax was used, and producing a coating film with good thermal adhesiveness.

Further, an antireflective function has recently become one of important required characteristics of image display panels. The antireflective function reduces the reflection of light, such as light of indoor fluorescent lamps, reflected on the image display panels and allows brighter images to be displayed. The antireflective function is based on the following principle. Forming an antireflective film of a structure in which a layer with a low refractive index is provided on the surface of a layer with a high refractive index makes it possible to reduce the reflection of light by using the difference in optical paths between the light reflected by the high-refractive layer and the light reflected by the low-refractive layer and to cause mutual interference thereof.

The conventional antireflective films having such an antireflective function have been usually fabricated by successively laminating high-refractive layers and low-refractive layers on a plastic substrate material by a dip method. However, because such a process was conducted in a batch mode, the production efficiency was low, causing cost increase in the fabrication of antireflective films. Further, when the dip coating method was employed, the speed of pulling the plastic substrate from the dipping liquid could easily cause non-uniformity of film thickness and a homogeneous micron-order film was usually difficult to obtain.

Accordingly, methods for thermal transfer or pressure sensitive transfer (that is, transfer methods) of a functional layer (transfer layer) formed on a release material onto the surface of a transfer substrate attracted much attention as methods for continuously forming function layers such as homogeneous micron-order antireflective films. For example, methods were suggested for transferring an antireflective film by the transfer method, those methods transferring a transfer material comprising a transfer layer comprising an antireflective layer composed of at least one low-refractive layer, a hard coat layer, and an adhesive layer (that is, comprising at least three layers) (Japanese Patent Applications Laid-open Nos. H10-16026 and H11-288225). A transfer material composed of two layers, an antireflective layer and an adhesive layer, has also been suggested (Japanese Patent Application Laid-open No. H8-248404).

However, the base polymer used in the hot-melt resin composition suggested in the Japanese Patent Application Laid-open No. S52-129750 is a thermoplastic resin with a high polarity, such as PVA. Therefore, the problem is that this resin has low compatibility with acrylic monomers, which are the photocurable monomers, and the photocurable monomers cannot be added to be 30 wt.% or over in the solids (components that become solid after curing) of the hot-melt resin composition. For this reason, though the photocurable monomers have been blended, the hot-melt resin composition had to be melted during coating and there was a risk of the monomers evaporating or polymerizing during melting.

Further, when a laminated material comprising a hard coat layer used to increase abrasion resistance is laminated on a substrate material, the problem associated with the hot-melt resin composition suggested in Japanese Patent Application Laid-open No. S52-129750 is that the surface hardness of the adhesive layer is low, causing degradation of the laminated layer performance.

On the other hand, with the methods disclosed in Japanese Patent Applications Laid-open Nos. H10-16026 and H11-288225, when adhesion between the adhesive layer and high-refractive layer was insufficient, an additional interlayer was required between those layers, resulting not only in a more complex layered structure, but also in the raised production cost of antireflective films. Further, in the case of the transfer material described in Japanese Patent Application Laid-open No. H8-248404, the transfer layer has no hard coat properties and a three-layer configuration similar to those described in Japanese Patent Applications Laid-open Nos. H10-16026 and H11-288225 is required to provide the hard coat properties. Accordingly, transfer materials have been sought which comprise functional layers capable of reducing the layered structure with the object of lowering production cost in the above-described conventional transfer methods.

Further, a layer of a polyorganosiloxane-derived material with predominantly siloxane bonds was often used for the low-refractive layer in the fabrication of the transfer material having a transfer layer comprising a layer with the antireflective function, but the problem was that because the wettability of the layer of a polyorganosiloxane-derived material with predominantly siloxane bonds is almost insufficient, "cissing" and "pinholes" appear when a coating film of a photocurable resin composition designed for forming a high-refractive layer was formed on the aforesaid layer and a homogeneous coating film was difficult to be formed. Such a problem was not limited to transfer materials comprising a layer with the antireflective function and the market also demanded improvement of transfer materials for other applications (for example, applications requiring a hard coat function, and an electrostatic function).

EP 0 844 286 A1 describes opaquely pigmented or thick filmed powder coatings for heat sensitive substrates, such as wood, wood composites, for example, medium density fiber board, and plastics, that can be fully cured, especially near the substrate, through the incorporation of a dual cure system in the powder comprising a thermal initiator, such as a peroxide, along with a UV initiator.

US-A-5,489,359 describes a printing method including an ink image forming step and an ink image retransferring step.

The present invention resolves the above-described problems inherent to the prior art technology and it is a first object of the present invention to provide a curable resin composition that can be coated at normal temperature and produces a cured product having a high surface hardness and demonstrating thermal adhesiveness, without using a viscous-reducing agent such as wax. It is a second object of the present invention to provide a transfer material comprising a cured resin layer having both the hard coat function and the thermal transfer function at the same time, a transfer material comprising a homogeneous cured resin layer which is free of "cissing" or "pinholes", even in the cases when "cissing" and "pinholes" are easily induced during coating of a typical photocurable resin composition on the surface of the release base film itself or the processed surface thereof, to a method for the manufacture of such transfer materials, and to a transfer product obtained from those transfer materials.

The inventors have conducted a comprehensive research of the above-described problems and have found that a cured product of a curable resin composition has good thermal adhesiveness if the curable resin composition is composed of a thermoadhesive polymer, an ethylenic unsaturated compound polymerizable by active energy radiation, and a polymerization initiator and if the compounding ratio of the thermoadhesive polymer and ethylenic unsaturated compound is within a specific range. This finding led to the completion of the first aspect of the present invention. It was also found that the cured product of such a curable resin composition demonstrates not only good thermal adhesiveness, but also good hardness. This finding led to the creation of the second aspect of the present invention.

Thus, in accordance with the first aspect of the present invention there is provided a curable resin composition comprising the following components (A), (B) and (C):

(A) a thermoadhesive polymer;
(B) an ethylenic unsaturated compound polymerizable by active energy radiation; and
(C) a polymerization initiator, wherein the relationships represented by the following formulas (1) and (2) are satisfied:

$$0.1 \leq (Awt)/\{(Awt) + (Bwt)\} \leq 0.6 \qquad (1)$$

$$0.4 \leq (Bwt)/\{(Awt) + (Bwt)\} \leq 0.9 \qquad (2)$$

where (Awt) stands for a compounded amount (parts by weight) of component (A), and (Bwt) stands for a compounded amount (parts by weight) of component (B),
wherein the relationship represented by the following formula (3) is further satisfied in said curable resin composition:

$$1 \leq v \leq 6 \qquad (3)$$

where v (mol/L) is the average value of crosslinking density of component (A) and component (B).

In accordance with the first aspect of the present invention, there is also provided a method for the manufacture of a laminate in which a cured resin layer is formed on a substrate material, this method comprising the following steps (a) and (b) of :

(a) forming a coating film composed of the above-described curable resin composition in accordance with the present invention on a substrate material; and
(b) forming a cured resin layer with thermal adhesiveness by irradiating the coating film composed of the curable resin composition thus obtained with active energy radiation, thereby polymerizing the ethylenic unsaturated compound of (B) contained in the coating film composed of the curable resin composition.

In accordance with the second aspect of the present invention, there is provided a transfer material comprising a release base film and a transfer layer provided thereon, wherein the transfer layer comprises at least one thermoadhesive cured resin layer composed of the above-described curable resin composition in accordance with the present invention and the thermoadhesive cured resin layer is disposed on the outermost surface on the side opposite to the release base film.

Further, in accordance with the second aspect of the present invention there is provided a method for the manufacture of a transfer material comprising a release base film and a transfer layer comprising a cured resin layer provided on the release base film, the method comprising the following steps (a') and (b') of :

(a') forming a film of the above-described curable resin composition in accordance with the first aspect of the present invention on the release base film; and
(b') forming a thermoadhesive cured resin layer by irradiating the film of the curable resin composition thus obtained with active energy radiation.

The first aspect of the present invention will be described hereinbelow in greater detail.

The curable resin composition in accordance with the first aspect of the present invention comprises the following components (A), (B) and (C):

(A) a thermoadhesive polymer;
(B) an ethylenic unsaturated compound polymerizable by active energy radiation; and
(C) a polymerization initiator, wherein the relationships represented by the following formulas (1) and (2) has to be satisfied:

$$0.1 \leq (Awt)/\{(Awt) + (Bwt)\} \leq 0.6 \qquad (1)$$

$$0.4 \leq (Bwt)/\{(Awt) + (Bwt)\} \leq 0.9 \qquad (2)$$

where (Awt) stands for a compounded amount (parts by weight) of component (A), and (Bwt) stands for a compounded amount (parts by weight) of component (B),
wherein the relationship represented by the following formula (3) is further satisfied in said curable resin composition:

$$1 \leq v \leq 6 \qquad (3)$$

where v (mol/L) is the average value of crosslinking density of component (A) and component (B). From the standpoint of improving adhesiveness and mechanical properties of the cured resin layer the curable resin composition is preferred in which the relationships represented by the following formulas are satisfied:

$$0.15 \leq (Awt)/\{(Awt) + (Bwt)\} \leq 0.3 \qquad (5)$$

$$0.7 \leq (Bwt)/\{(Awt) + (Bwt)\} \leq 0.85 \qquad (6)$$

In the above-formulas, if the numerical value of (Awt)/{(Awt) + (Bwt)} is less than 0.1, the adhesive strength of the cured layer during curing of the curable resin composition becomes insufficient. On the other hand, if this numerical value is above 0.6, the relative content ratio of the ethylenic unsaturated compound of component (B), is reduced and there is a possibility of mechanical properties of the cured resin layer being degraded. Furthermore, if the numerical value of (Bwt)/{(Awt) + (Bwt)} is less than 0.4, the content ratio of the ethylenic unsaturated compound of component (B), is reduced and there is a possibility of mechanical properties of the cured resin layer being degraded. On the other hand, if this numerical value exceeds 0.9, the relative amount of thermoadhesive polymer of component (A), decreases and the adhesive strength of the cured layer becomes insufficient.

Further, from the standpoint of improving thermal adhesiveness and hardness, the relationship represented by the following formula (3) be satisfied in the aforesaid curable resin composition:

$$1 \leq v \leq 6 \qquad (3)$$

where v (mol/L) is the average of crosslinking density of component (A) and component (B). It is even more preferred that the average value (v) of crosslinking density is within the range of 1 to 4.5.

Further, from the standpoint of improving adhesion to the transfer substrate composed of a methacrylic resin, it is preferred that the relationship represented by the following formula (4) be satisfied in the curable resin composition according to the first aspect of the present invention:

$$9.5 \leq \delta \leq 11 \qquad (4)$$

where $\delta$ is the average value of solubility parameter (sp value) of component (A) and component (B). It is even more preferred that the average value ($\delta$) of solubility parameter (sp value) be within a range of 9.5 to 10.5.

The thermoadhesive polymer of component (A) used in the above-described curable resin composition is a component providing the curable resin composition with thermal adhesiveness. No specific limitation is placed on such a thermoadhesive polymer, on the condition that it can provide the cured resin layer with thermal adhesiveness. However, it is preferred that the thermoadhesive polymer has a glass transition temperature (at least one glass transition temperature when the polymer has a plurality of glass transition temperatures) of no less than 60°C and no higher than 180°C, more preferably, no less than 80°C and no higher than 140°C, because such polymers have excellent thermal adhesiveness and excellent compatibility with the ethylenic unsaturated compound of component (B) described below. Further, from the standpoint of increasing compatibility with the ethylenic unsaturated compound of component (B), it is even more preferred that the thermoadhesive polymer be non-soluble in water.

The curable resin composition according to the present invention preferably comprises a polymer containing methyl methacrylate units as the main component being a mixture composed of a polymer comprising methyl methacrylate units with an isotacticity of no less than 50% as the main component and a polymer comprising methyl methacrylate units with syndiotacticity of 40 to 80% as the main component.

Specific examples of such thermoadhesive polymer of component (A) include methyl methacrylate polymers, styrene polymers, polyacrylonitrile, polyvinyl chloride, polyvinyl acetate, polyesters, random copolymers, block copolymers, and graft copolymers comprising those polymers. Among them, for example, when bonding is made to a methacrylic resin sheet, polymers containing methyl methacrylate unit as the main component are preferred from the standpoint of affinity to the substrate.

When the curable resin composition for forming the cured resin layer is coated on a layer having a low-wettability surface where "cissing" or "pinholes" can be easily induced, it is preferred that a polymer that is in a gel form in a non-cured state, such as a mixture of methyl methacrylate polymer with a high content of isotactic component ("isotactic" is sometimes represented hereinbelow as "iso-") and methyl methacrylate polymer with a high content of syndiotactic component ("syndiotactic" is sometimes represented hereinbelow as "syn-"), be used as the thermoadhesive polymer of component (A). In such a mixture, for example, it is preferred that isotacticity of the iso-poly(methyl methacrylate) be no less than 50% and syndiotacticity of the syn-poly(methyl methacrylate) be within a range of 40 to 80%, it is more preferred that the isotacticity of the former be no less than 80% and the syndiotacticity of the latter be within a range of 50 to 70%, and it is even more preferred that the isotacticity of the former be no less than 90% and the syndiotacticity of the latter be within a range of 50 to 70%. As for the mixing ratio of iso-poly(methyl methacrylate) and syn-poly(methyl methacrylate), for example, in order to facilitate the initiation of pseudocrosslinking between the molecular chains, the weight ratio of syn-poly(methyl methacrylate) is preferably within a range of 30 to 70 wt.%, more preferably, within a range of 60 to 70 wt.%, when the total weight of iso-poly(methyl methacrylate) and syn-poly(methyl methacrylate) is assumed to be 100 wt.%.

No specific limitation is placed on the polymerizable ethylenic unsaturated compound of component (B) constituting the curable resin composition according to the first aspect of the present invention, provided that the cured layer composed of the curable resin composition demonstrates thermal adhesiveness. Examples of the polymerizable ethylenic unsaturated compounds include compounds with at least two ethylene-type double bonds in a molecule, those compounds being polymerizable by irradiation with active energy radiation (for example, UV radiation, visible light, electron beams or X rays), in the presence of a polymerization initiator. If necessary, vinyl ether compounds, epoxy compounds, or oxetane compounds which are cationically polymerizable in the presence of a catalytic compound or without such can be used in combination with the above-mentioned compound. In the present specification, acryloyl group and methacryloyl group, acrylate group and methacrylate group, and acrylic acid and methacrylic acid are sometimes presented in an abbreviated form of (meth)acryloyl group, (meth)acrylate group, and (meth)acrylic acid, respectively.

Specific examples of polymerizable ethylenic unsaturated compound of component (B) include: (meth)acrylic acid; monofunctional (meth)acrylate monomers such as methyl (meth)acrylate, ethyl (meth)acrylate, propyl (meth)acrylate, n-butyl (meth)acrylate, t-butyl (meth)acrylate, 2-ethylhexyl (meth)acrylate, n-nonyl (meth)acrylate, cyclohexyl (meth)acrylate, benzyl (meth)acrylate, dicyclopentenyl (meth)acrylate, 2-dicyclopentenoxyethyl (meth)acrylate, glycidyl (meth)acrylate, methoxyethyl (meth)acrylate, ethoxyethyl (meth)acrylate, butoxyethyl (meth)acrylate, methoxyethoxyethyl (meth)acrylate, ethoxyethoxyethyl (meth) acrylate, tetrahydrofurfuryl (meth)acrylate, 2-hydroxyethyl (meth)acrylate, 2-hydroxypropyl (meth)acrylate, 4-hydroxybutyl (meth)acrylate, phenoxyethyl (meth)acrylate, phenoxyethoxyethyl (meth)acrylate, biphenoxyethyl (meth)acrylate, biphenoxyethoxyethyl (meth)acrylate, norbornyl (meth)acrylate, phenylepoxy (meth)acrylate, (meth)acryloylmorpholine, N-[2-(meth)acryloylethyl]-1, 2-cyclohexanedicarbimide, N-[2-(meth) acryloylethyl)-1, 2-cyclohexanedicarbimido-1-en, N-[2-(meth)acryloylethyl]-1, 2-cyclohexanedicarbimido-4-en or γ-(meth)acryloyl oxypropyl trimethoxysilane; vinyl monomers such as N-vinylpyrrolidone, N-vinylimidazole, N-vinylcaprolactam, styrene, α-methylstyrene, vinyltoluene, allyl acetate, vinyl acetate, vinyl propionate or vinyl benzoate; difuncitonal (meth)acrylates such as 1,4-butanediol di(meth)acrylate, 1,6-hexanediol di(meth)acrylate, 1,9-nonanediol di(meth)acrylate, neopentyl glycol di(meth)acrylate, neopentyl glycol pivalic acid ester di(meth)acrylate, ethylene glycol di(meth) acrylate, polyethylene glycol di(meth)acrylate, triethylene glycol di(meth)acrylate, polypropylene glycol di(meth)acrylate, bisphenol A diglycidyl ether di(meth)acrylate, bisphenol-A-diepoxy di(meth)acrylate, ethylene oxide-modified bisphenol-A-di(meth)acrylate, ethylene oxide-modified diacrylate of 1,4-cyclohexanedimethanol, zinc di(meth)acrylate or bis (4-(meth)acrylthiophenyl) sulfide; polyfunctional monomers with a functionality of three or more, such as trimethylolpropane tri(meth)acrylate, ditrimethylolpropane tetra(meth)acrylate, pentaerythritol tetra(meth)acrylate, pentaerythritol penta(meth)acrylate, pentaerythritol hexa(meth)acrylate, ethylene oxide - trimethylolpropane adduct tri(meth)acrylate, ethylene oxide - ditrimethylolpropane adduct tetra(meth)acrylate, propylene oxide - trimethylolpropane adduct tri(meth) acrylate, propylene oxide - ditrimethylolpropane adduct tetra(meth)acrylate, ethylene oxide - pentaerythritol adduct tetra (meth)acrylate, propylene oxide - pentaerythritol adduct tetra(meth)acrylate, dipentaerythritol penta(meth)acrylate, ethylene oxide - dipentaerythritol adduct penta(meth)acrylate, propylene oxide - dipentaerythritol adduct penta(meth)acrylate, dipentaerythritol penta(meth)acrylate, dipentaerythritol hexa(meth)acrylate, ethylene oxide - dipentaerythritol adduct hexa(meth)acrylate, propylene oxide - dipentaerythritol adduct hexa(meth)acrylate, triallyl cyanurate, triallyl isocyanurate, triallyl formal or 1,3,5-triacryloylhexahydro-s-triazine; and oligoacrylates such as urethane acrylates or ester acrylates. Among them, polyfunctional monomers with a functionality of no less than two are preferably used. Those ethylenic unsaturated compounds can be used individually or in combinations of two or more thereof.

Further, if necessary, vinyl ether compounds, epoxy compounds, or oxetane compounds which are polymerizable by active energy radiation may be used together with the ethylenic unsaturated compound of component (B).

Specific examples of the vinyl ether compounds include ethylene oxide-modified bisphenol A divinyl ether, ethylene oxide-modified bisphenol F divinyl ether, ethylene oxide-modified catechol divinyl ether, ethylene oxide-modified resorcinol divinyl ether, ethylene oxide-modified hydroquinone divinyl ether or ethylene oxide-modified 1,3,5-benzenetriol trivinyl ether.

Specific examples of the epoxy compounds include 1,2-epoxycyclohexane, 1,4-butanediol diglycidyl ether, 3,4-epoxycyclohexylmethyl-3',4'-epoxycyclohexane carboxylate, trimethylolpropane diglycidyl ether, bis(3,4-epoxy-6-methyl cyclohexylmethyl) adipate, phenol novolak glycidyl ether or bisphenol A diclycidyl ether.

Furthermore, specific examples of oxetane compounds include 3-ethyl-3-hydroxymethyloxetane, 3-ethyl-3-(phenoxymethyl)oxetane, di[1-ethyl(3-oxetanyl)]methyl ether or 3-ethyl-3-(2-ethylhexyloxymethyl)oxetane.

As described above, the condition represented by formula (3) below is satisfied in the curable resin composition according to the first aspect of the present inventiori:

$$1 \leq v \leq 6 \qquad\qquad (3)$$

where v (mol/L) is the average of crosslinking density of the above-described component (A) and component (B).

The average (v) of crosslinking density is an indicator of surface hardness of the cured material and can be calculated by the following method.

If the content (parts by weight) of component (A) is denoted by (Awt), the content (parts by weight) of component (B) is denoted by (Bwt), the number of functional groups per one molecule of each component (B) in a resin composition with component (B) comprising ethylenic unsaturated compounds of n types polymerizable by active energy radiation is denoted by fn (n = 1, 2, ... n), the molecular weight of each component (B) is denoted by Mwn (n = 1, 2, ... n), the molar fraction (mol%) of each component (B) in the component (B) is denoted by Rn (n = 1, 2, ... n), the average molecular weight of component (B) is denoted by Mwb, the average density (mol/L) of functional groups of component (B) is denoted by fb, the crosslinking density (mol/L) of component (B) is denoted by vb, and the average value (mol/L) of crosslinking density of component (A) and component (B) is denoted by v, then the average value (v) of crosslinking density can be represented by the following formula.

$$(v) = (vb) \times (Bwt)/(Awt + Bwt)$$

where (vb), fb, and Mwb can be represented by the following formulas:

$$(vb) = ((fb) - 1) \times 2 \times 1000/(Mwb)$$

$$fb = \Sigma\{(fn) \times Rn/100\}$$

$$Mwb = \Sigma\{(Mwn) \times Rn/100\}$$

For example, when the average (v) of crosslinking density is calculated for a polymer composition comprising 30 parts by weight of poly(methyl methacrylate) (PMMA) as component (A) and 56 parts by weight of trimethylolpropane triacrylate (TMPTA) and 14 parts by weight of pentaerythritol tetracrylate (PETA) as component (B), then, first, fb and Mwb are calculated by using the values shown in the following Table 1.

Table 1

| | COMPONENT CLASS | Mw (MOLECULAR WEIGHT) | f (NUMBER OF FUNCTIONAL GROUPS) | wt (PARTS BY WEIGHT) | R (FRACTION IN COMPONENT (B)) |
|---|---|---|---|---|---|
| PMMA | COMPONENT A | - | - | 30 | - |
| TMPTA | COMPONENT B | 296.3 | 3 | 56 | 82.6 |
| PETA | COMPONENT B | 352.3 | 4 | 14 | 17.3 |

$$fb = (3 \times 82.6/100 + 4 \times 17.3/100) = 3.2$$

$$Mwb = (296.3 \times 82.8/100 + 352.3 \times 17.3/100) = 305.7$$

Then, (vb) is found from the values of fb and Mwb thus obtained and the average value (v) of crosslinking density is found from the obtained (vb).

$$(vb) = (3.2-1) \times 2 \times 1000/305.7 = 14.2$$

$$(v) = 14.4 \times 70/(30 + 70) = 9.9$$

Further, as described above, if the average value of solubility parameter (sp value) of component (A) and component (B) is denoted by δ, then the relationship described by the following formula (4) is preferably satisfied:

$$9.5 \leq \delta \leq 11.00 \qquad (4)$$

Here, the average value (δ) of solubility parameter (sp value) is an indicator showing the adhesiveness to a substrate material and can be calculated as described below.

Thus, the solubility parameter (sp value) of each component (A) and component (B) can be calculated by using the computation formula suggested by Fedors (Practical Polymer Science (Junji Mukai, Tokuyuki Kanashiro, published by Kodansha Scientific Co., 1981, p. 71-77; POLYMER ENGINEERING AND SCIENCE, FEBRUARY, 1974, VOL. 14, No. 2). For example, the average value of solubility parameter (sp value) of a resin composition composed of components (A) and (B), with a total number of types thereof being n (n is integer of no less than 2), can be found by the following formula

$$\delta = \Sigma(\delta n \times Rn)$$

(in this formula, δ is the average value $(cal/cm^3)^{1/2}$ of solubility parameter (sp value) of component (A) and component (B), δn is the solubility parameter (sp value : $(cal/cm^3)^{1/2}$) of component (A) and component (B), Rn (n = 1, 2, ... n) is the molar fraction of each component (A) and component (B) in (component (A) + component (B)).

Here δn is represented by the following formula

$$\delta n = \{(\Sigma(\Delta ei)/\Sigma(\Delta vi))\}^{1/2}$$

(in the formula, Δei stands for the evaporation energy (cal/mol) of each atom or atomic group and Avi stands for the molar volume $(cm^3/mol)$ of each atom or atomic group).

Further, for compounds with a glass transition temperature (Tg) of no less than 25°C, the following values are added to molar volume (Δvi).

When n < 3, +Δvi = 4n

When n ≥ 3, +Δvi = 2n

(in the formulas, n stands for a number of atoms in the main chain skeleton in a minimum repeating unit of the polymer).

An example of calculating the average value δ of solubility parameter (sp value) is shown below.

Values of evaporation energy (Δei) of each atom or atomic group and molar volume (Δvi) of each atom or atomic group were taken mainly from Practical Polymer Science (Junji Mukai, Tokuyuki Kanashiro, published by Kodansha Scientific Co., 1981, p. 71-77).

For example, when the average value (δ) of solubility parameter (sp value) of component (A) and component (B) is calculated for a polymer composition comprising 30 parts by weight of poly(methyl methacrylate) (PMMA, Mw 100,000) as component (A) and 56 parts by weight of trimethylolpropane triacrylate (TMPTA) and 14 parts by weight of pentaerythritol tetracrylate (PETA) as component (B), then, first, δ value of each component (that is, PMMA (δ1), TMPTA (δ2), and PETA (83)) are calculated by using fundamental data shown in Tables 2 through 4.

Table 2. <PMMA ($\delta1$)>

| ATOMIC GROUP | NUMBER OF ATOMIC GROUPS | $\Delta ei$ | $\Delta vi$ |
|---|---|---|---|
| $CH_3$ | 2 | $1125 \times 2$ | $33.5 \times 2$ |
| $CH_2$ | 1 | 1180 | 16.1 |
| CH | 1 | 820 | -1.0 |
| -COO- | 1 | 4300 | 18.0 |
| NUMBER OF ATOMS IN MAIN CHAIN SKELETON | 2 | - | $2 \times 2$ |

$$\delta1 = \{(\Sigma(\Delta ei)/\Sigma(\Delta vi))\}^{1/2} = (8550/104.1)^{1/2} = 9.1$$

Table 3. <TMPTA ($\delta2$)>

| ATOMIC GROUP | NUMBER OF ATOMIC GROUPS | $\Delta ei$ | $\Delta vi$ |
|---|---|---|---|
| $CH_3$ | 1 | 1125 | 33.5 |
| $CH_2$ | 4 | $1180 \times 4$ | $16.1 \times 4$ |
| C | 1 | 350 | -19.2 |
| $CH_2=$ | 3 | $1030 \times 3$ | $28.5 \times 3$ |
| -CH= | 3 | $1030 \times 3$ | $13.5 \times 3$ |
| -COO- | 3 | $300 \times 3$ | $18.0 \times 3$ |

$$\delta2 = \{(\Sigma(\Delta ei)/\Sigma(\Delta vi))\}^{1/2} = (25275/259.0)^{1/2} = 9.9$$

Table 4. <PETA ($\delta3$)>

| ATOMIC GROUP | NUMBER OF ATOMIC GROUPS | $\Delta ei$ | $\Delta vi$ |
|---|---|---|---|
| $CH_2$ | 4 | $1180 \times 4$ | $16.1 \times 4$ |
| C | 1 | 350 | -19.2 |
| $CH_2=$ | 4 | $1030 \times 4$ | $28.5 \times 4$ |
| -CH= | 4 | $1030 \times 4$ | $13.5 \times 4$ |
| -COO- | 4 | $4300 \times 4$ | $18.0 \times 4$ |

$$\delta3 = \{(\Sigma(\Delta ei)/\Sigma(\Delta vi))\}^{1/2} = (30510/284.8)^{1/2} = 10.4$$

$\delta$ values for each component described above are shown in Table 5.

Table 5

| | COMPONENT CLASS | Mw (MOLECULAR WEIGHT) | $\delta$ VALUE | R (MOL%) |
|---|---|---|---|---|
| PMMA | COMPONENT A | 100 | 9.1 | 56.7 |
| TMPTA | COMPONENT B | 296.3 | 9.9 | 35.8 |

Table continued

|  | COMPONENT CLASS | Mw (MOLECULAR WEIGHT) | δ VALUE | R (MOL%) |
|---|---|---|---|---|
| PETA | COMPONENT B | 352.3 | 10.4 | 7.5 |
| Note: Mw stands for molecular weight of each component (however, in the case of a polymer, it stands for a molecular weight of repeating unit). | | | | |

Therefore, the average value (δ) of solubility parameter (sp values) of component (A) and component (B) can be found from Table 5 in the manner as follows.

$$\delta = 9.1 \times 0.567 + 9.9 \times 0.358 + 10.4 \times 0.075 = 9.5$$

The polymerization initiator of component (C) constituting the curable resin composition according to the first aspect of the present invention can be appropriately selected according to the type (UV radiation, visible light or electron beams) of the active energy radiation that is the curing means. Further, when photopolymerization is conducted, it is preferred that a photopolymerization initiator be used and that a well-known photocatalytic compound of at least one type selected from photosensitizers or photoenhancers be used together therewith.

Specific examples of photopolymerization initiators include 2,2-dimethoxy-2-phenylacetone, acetophenone, benzophenone, xanthofluorenone, benzaldehyde, anthraquinone, 3-methylacetophenone, 4-chlorobenzophenone, 4,4-diaminobenzophenone, benzoin propyl ether, benzoin ethyl ether, benzyl dimethyl ketal, 1-(4-isopropylphenyl)-2-hydroxy-2-methylpropan-1-one, 4-oxyxanthone, camphorquinone or 2-methyl-1-[4-(methylthio)phenyl]-2-morpholinopropan-1-one. Photopolymerization initiators comprising at least one (meth)acryloyl group in a molecule can be also used.

The content ratio of photopolymerization initiator in the curable resin composition is preferably no less than 0.1 wt.% and no more than 10 wt.%, more preferably, no less than 3 wt.% and no more than 5 wt.% in the solids (also including the components that are solidified after curing) from which the diluting agent has been removed.

In accordance with the first aspect of the present invention, a photosensitizer may be used in combination with the photopolymerization initiator to enhance photopolymerization. Specific examples of photosensitizers include 2-chlorothioxanthone, 2,4-diethylthioxanthone or 2,4-diisopropylthioxanthone.

Further, in accordance with the first aspect of the present invention, a photoenhancer may be used in combination with the photopolymerization initiator to enhance photopolymerization. Specific examples of photoenhancers include ethyl p-dimethylaminobenzoate, isoamyl p-dimethylaminobenzoate, 2-n-buthoxyethyl p-dimethylaminobenzoate or 2-dimethylaminoethyl benzoate.

Further a diluting agent can be added to the curable resin composition to coat the curable resin composition as a thin film when a cured resin layer having thermal adhesiveness is formed. In this case, the diluting agent can be added in any amount according to the target thickness of the layer composed of the curable resin composition.

No specific limitation is placed on the diluting agent, provided that it has been used for usual resin coating materials. Examples of suitable diluting agents include ketone compounds such as acetone, methyl ethyl ketone or cyclohexanone; ester compounds such as methyl acetate, ethyl acetate, butyl acetate, ethyl lactate or methoxyethyl acetate; ether compounds such as diethyl ether, ethylene glycol dimethyl ether, ethyl cellosolve, butyl cellosolve, phenyl cellosolve or dioxane; aromatic compounds such as toluene or xylene; aliphatic compounds such as pentane or hexane; halogen-based hydrocarbons such as methylene chloride, chlorobenzene or chloroform; alcohol compounds such as methanol, ethanol, normal propanol or isopropanol; and water.

A silane compound represented by the following chemical formula (I)

$$R_nSiX_{4-n} \qquad (I)$$

(where R is hydrogen atom, alkyl group (for example, methyl group, ethyl group or propyl group), aryl group (for example, phenyl group or tolyl group), an organic group containing a carbon - carbon double bond (for example, acryloyl group, methacryloyl group or vinyl group), or an organic group containing an epoxy group (for example, epoxycyclohexyl group or glycidyl group); when two or three R are present, they may be same or different. X is hydroxyl group, alkoxy group (for example, methoxy group or ethoxy group), alkoxyalkoxy group (for example, methoxyethoxy group or ethoxymethoxy group) or halogen atom (for example, chlorine atom, bromine atom or iodine atom); when two or three X are present, they may be same or different. n is integer of 1 to 3) can be further introduced as component (D) into the curable resin composition according to the first aspect of the present invention. Introducing the aforesaid silane compound in the curable resin composition makes it possible to form a homogeneous layer free of "cissing" and "pinholes", to form a homogeneous film even after curing, and to ensure more tight bonding with a substrate material even when the curable resin composition is coated on the surface of a release base film, layer of material with predominantly siloxane bonds, or substrate material layer which has a surface with a low surface tension and for which tight bonding to the coating material is difficult to ensure.

Specific examples of silane compounds represented by the aforesaid chemical formula (I) include γ-(meth) acryloyloxypropyltrimethoxysilane, γ-epoxypropyltrimethoxysilane, phenyltrimethoxysilane, vinyltrimethoxysilane, ethyltrimethoxysilane, methyltrimethoxysilane, dimethyldimethoxysilane, methyltrichlorosilane or ethyldichlorosilane.

The content of the silane compound of component (D) in the curable resin composition is preferably 10-15 wt% based on the solids of the curable resin composition in order to obtain better adhesion of the film.

If necessary, inorganic fillers, polymerization inhibitors, coloring pigments, dyes, antifoaming agents, leveling agents, dispersing agents, light scattering agents, plasticizers, antistatic agents, surfactants, non-reactive polymers and near-IR absorbers can be added to the curable resin composition for forming a cured resin layer, within ranges that do not degrade the effect of the present invention.

The curable resin composition can be prepared by homogeneously mixing by the usual method the above-described components (A), (B) and (C) and also other components such as component (D) which are added as necessary.

The method for the manufacture of a laminate in which a cured resin layer is formed on a substrate material, according to the first aspect of the present invention, comprises the following steps (a) and (b) of:

(a) forming a coating film composed of the above-described curable resin composition on a substrate material; and
(b) forming a cured resin layer with thermal adhesiveness by polymerizing the ethylenic unsaturated compound of component B contained in the coating film composed of the curable resin composition by irradiating the coating film composed of the curable resin composition thus obtained with active energy radiation.

Thus, the curable resin composition according to the first aspect of the present invention can be advantageously used as a starting material for the cured resin layer in the manufacture of a laminate in which at least the cured resin layer is laminated on a substrate material. Furthermore, such a laminate can be manufactured by the manufacturing method comprising the following steps (a) and (b).

The present invention further provides a laminate in which at least one cured resin layer is formed on the substrate obtained by the method for the manufacture of a laminate according to the present application.

### Step (a)

First, a film of the curable resin composition according to the first aspect of the present invention is formed on a substrate material by dip coating process, coating process using a roll employed in relief printing, lithographic printing, intaglio printing, or spraying method in which coating material is sprayed over the substrate material, or curtain flow coating process.

Metal (steel or aluminum) substrate, ceramic substrates including glass substrates, plastic substrates from acrylic resins, PET, polycarbonates, thermosetting resin substrates, in the form of sheets or film can be used as the substrate material.

Further, when a diluting agent (solvent) is contained in the curable resin composition, the diluting agent is preferably removed in advance prior to implementing step (b). In this case, it is usually evaporated by heating. A heating furnace or a far-IR furnace can be used for heating.

### Step (b)

The film composed of the curable resin composition obtained in process (a) is cured by irradiating with an active energy radiation and a cured resin layer with excellent thermal adhesiveness is formed. As a result, a laminated body in which a uniform and thin (for example, no less than 0.01 μm and no more than 10 μm) cured resin layer is formed on a substrate can be obtained even when a substrate with poor paint wettability is used.

A wide range of radiation types, such as UV radiation, visible radiation, laser, electron beam, X rays, can be used as the active energy radiation. From the standpoint of practical use, it is preferred that among those radiation types the UV radiation be employed. Specific examples of UV radiation sources include low-pressure mercury lamps, high-pressure mercury lamps, xenon lamps or metal halide lamps.

Further, the laminated body thus obtained does not necessarily have a two-layer structure. Thus, a layer of thermoplastic, thermosetting, or photocurable material may be provided in advance, or it may be provided again after the formation of the cured resin layer.

The cured resin layer composed of the curable resin composition in accordance with the first aspect of the present invention uses a thermoadhesive polymer and has a hard coat function. Therefore, the properties thereof are such that usually the pencil hardness is no less than H and the difference between the haze (ΔH) values before and after acetone coating is in the range of 0.3 to 40.

Properties of such a cured resin layer can be estimated by an acetone resistance test and pencil hardness test.

Because the laminated body comprising the cured resin layer with such properties demonstrate thermal adhesiveness and has a high surface hardness, it can be advantageously applied to goods such as laminated materials, which are used for wallpaper.

The transfer material, a method for the manufacture thereof, and a transfer product according to the second aspect of the present invention will be described below.

The transfer material according to the second aspect of the present invention has a structure in which a transfer layer is provided on a release base film. A specific feature of the transfer layer is that it comprises at least one thermoadhesive cured resin layer composed of the curable resin composition according to the first aspect of the present invention and the thermoadhesive cured resin layer is disposed on the outermost surface on the side opposite to the release base film.

In accordance with the second aspect of the present invention, the transfer layer may consist only of the cured resin layer having thermal adhesiveness (only one cured resin layer), or it may have a multilayer structure comprising no less than two layers including a low-refractive layer or a cured resin layer. For example, the transfer layer may be composed of a cured resin layer demonstrating a hard coat function and a heat transfer function at the same time and a low-refractive layer such as a layer of a material with predominantly siloxane bonds, which has low wettability (water-repellant or oil-repellant), or a fluororesin layer.

Furthermore, according to the object of the transfer material usage, the transfer layer can comprise an antireflective layer composed of a low-refractive layer other than the above-mentioned layer, an antireflective layer composed of a low-refractive layer and a high-refractive layer, a hard coat layer of an acrylic resin, a silicone resin, a functional layer such as an antibacterial layer, a decorative layer such as a printed layer, a colorant layer, a deposited layer (electrically conductive layer) composed of a metal or a metal compound or a primer layer.

Specific examples of the layered structure of the transfer layer include: cured resin layer, low-refractive layer / cured resin layer, low-refractive layer / high-refractive layer / cured resin layer, low-refractive layer / high-refractive layer / vapor-deposited layer / primer layer / cured resin layer, low-refractive layer / high-refractive layer / primer layer /vapor-deposited layer / primer layer / cured resin layer, low-refractive layer / high-refractive layer / primer layer / cured resin layer, hard coat layer / cured resin layer, printed layer / cured resin layer or decorative layer / cured resin layer.

No specific limitation is placed on the thickness of the cured resin layer, and usually it is appropriately selected from a range of 0.5-20 μm. Further, no specific limitation is also placed on the thickness of other layers, and usually it is appropriately selected from a range of 0.1-50 μm.

In order to form the cured resin layer from the curable resin composition, active energy radiation of a wide range of radiation types, such as UV radiation, visible light radiation, α radiation, β radiation or γ radiation, can be used according to the conventional photocuring technology of photopolymerizable resins with respect to the formed film of the curable resin composition. Among those radiation types, the UV radiation is preferably used. A light source of any type, for example, a spot light source, linear light source or surface light source can be used, but from the standpoint of practical use, a linear light source is typically employed. For example, a UV lamp is typically used as a UV generation source because of its utility and cost efficiency. Specific examples of such UV lamps include low-pressure mercury lamps, high-pressure mercury lamps, xenon lamps or metal halide lamps. Further, when a spot light source of linear light source is used, scanning may be appropriately employed so as to illuminate the layer composed of a photocurable resin composition with the prescribed light.

The transfer material according to the second aspect of the present invention comprises a release base film and a transfer layer provided thereon, and the transfer layer comprises at least a cured layer composed of the curable resin composition according to the first aspect of the present invention. Further, the transfer layer may be composed only of the cured resin layer, or can have a cured resin layer and at least one layer selected from an antireflective layer composed of a low-refractive layer, an antireflective layer composed of a low-refractive layer and a high-refractive layer, a hard coat layer of an acrylic resin or a silicone resin, a functional layer such as an antibacterial layer or an electrically conductive layer, a decorative layer such as a printed layer or a colorant layer, a deposited layer composed of a metal or a metal compound or a primer layer.

Specific examples of the layered structure of the transfer material include: release base film / cured resin layer, release base film / low-refractive layer / cured resin layer, release base film / low-refractive layer / high-refractive layer / cured resin layer, release base film / low-refractive layer / high-refractive layer / vapor-deposited layer / primer layer / cured resin layer, release base film / low-refractive layer / high-refractive layer / primer layer /vapor-deposited layer / primer layer / cured resin layer, release base film / low-refractive layer / high-refractive layer / primer layer / cured resin layer, release base film / hard coat layer / cured resin layer, release base film / printed layer / cured resin layer or release base film / decorative layer / cured resin layer.

No specific limitation is placed on the release base film used in the transfer material according to the second aspect of the present invention, and any film can be used provided that it has release and sufficient self-supporting ability and can be used with the usual transfer materials. Specific examples of such release base films include synthetic resin films such as polyethylene terephthalate film, polypropylene film, polycarbonate film, polystyrene film, polyamide film, polyamideimide film, polyethylene film, polyvinyl chloride film or fluororesin film, man-made resin films such as cellulose acetate film, Western paper such as cellophane paper or glassine paper, other film-like products such as Japanese paper, composite film-like or sheet-like products composed therefrom, and those products subjected to release treatment.

No specific limitation is placed on the thickness of the release base film, but in order to suppress the formation of wrinkles or cracks, it is usually preferred that the thickness be within a range of 4-150 $\mu$m, more preferably, within a range of 12-100 $\mu$m, still more preferably, within a range of 30 to 100 $\mu$m.

When the release ability of the release base film is insufficient, the release treatment can be conducted on at least one side of the release base film. Such a release treatment can be conducted by the conventional methods by appropriately selecting a release polymer or wax. Examples of treatment agents used for such release treatment include release waxes such as paraffin waxes, release resins such as silicone resins, melamine resins, urea resins, urea-melamine resins, cellulose resins or benzoguanamine resins, and surfactants of various types. Those agents can be used individually or upon mixing with a solvent, coated on a release base film by the usual printing method such as gravure printing method, screen printing method or offset printing method, dried, and cured (heating, UV irradiation, electron beam irradiation, irradiation with ionizing radiation), if necessary.

As described above, a primer layer can be provided in a transfer layer having a multilayer structure in the transfer material according to the second aspect of the present invention. Such a primer layer is a coating layer of a composition based on a polymer component with good adhesion to body layers in the transfer material according to the second aspect of the present invention, this coating layer preferably having a thickness within a range of about 0.5 to 5 $\mu$m. Specific examples of the primer layer include layers of acrylic resin, vinyl acetate resin, melamine resin, polyester resin or urethane resin. Those layers can be formed by dissolving the resin in a solvent, coating by the aforesaid printing method, and drying.

The transfer layer constituting the transfer material according to the second aspect of the present invention can comprise, as mentioned hereinabove, a layer of material with predominantly siloxane bonds forming a low-refractive layer. The layer of the material with predominantly siloxane bonds preferably has a low refractive index of no more than 1.5, more preferably, no less than 1.2 and no more than 1.4, excellent transparency, and a pencil hardness after film formation of no less than H.

Specific examples of layers of the material with predominantly siloxane bonds include layers formed from compounds in which part of siloxane bonds is replaced with hydrogen atoms, hydroxyl groups, unsaturated groups or alkoxyl groups. Such layers may be also formed by introducing in advance an agent reducing refractive index, such as ultrafine particles of $SiO_2$, into the aforesaid compounds and converting into a resin.

The thickness of the layer of material with predominantly siloxane bonds is usually within a range of from 0.05 $\mu$m to 10 $\mu$m, more preferably, within a range of from 0.09 $\mu$m to 3 $\mu$m.

Further, when the transfer layer is composed of a layer of material with predominantly siloxane bonds and cured resin layer, the layer of material with predominantly siloxane bonds can serve as a low-refractive layer and the cured resin layer can serve as a thermoadhesive layer with a high refractive index. Therefore, the transfer material in accordance with the present invention can transfer a good antireflective film.

The transfer material according to the second aspect of the present invention, which comprises a release base film and a transfer layer comprising a cured resin layer provided on the release base film, can be manufactured by the manufacturing method comprising the following steps (a') and (b').

Step (a')

First, a film composed of the aforesaid curable resin composition according of the first aspect of the present invention is formed on a release base film by coating on the surface of the release base film by a process such as a dip coating process, a coating process using a roll employed in relief printing, lithographic printing or intaglio printing, spraying method in which coating material is sprayed over the substrate material, or curtain coating process, and drying, if necessary.

Further, when a diluting agent (solvent) is contained in the curable resin composition, the diluting agent is preferably removed in advance prior to implementing step (b'). In this case, it is usually evaporated by heating. A heating furnace or a far-IR furnace can be used for heating.

Step (b')

A cured resin layer with excellent surface hardness and thermal adhesiveness is then formed by curing the film composed of the curable resin composition and obtained in step (a') with active energy radiation. As a result, a

EP 1 354 918 B1

transfer material can be obtained in which a homogeneous thin (for example, with a thickness of no less than 0.01 $\mu$m and no more than 10 $\mu$m) cured resin layer is formed on the substrate material even when the substrate material has poor wettability with coating material.

When a cured resin layer is provided as any of the layers on the base film surface, it is preferably located on the outermost side (outermost layer of the transfer layer).

The cured resin layer composed of the curable resin composition according to the second aspect of the present invention uses a thermoadhesive polymer and has a hard coat function. Therefore, evaluation can be conducted by an acetone resistance test and pencil hardness measurements. The pencil hardness in this case is no less than H and the difference between haze values before and after acetone coating is within a range of 0.3 to 40.

The transfer material according to the second aspect of the present invention can be used for thermally transferring the transfer layer on a transfer substrate by bringing the cured resin layer composed of the curable resin composition (outermost surface) in intimate contact with the transfer substrate and heating. No specific limitation is placed on the shape of the transfer substrate, the preferred examples including commercial resin sheets, films or glass sheets. In applications as protective sheets for display screens, the transfer substrate is preferably a resin sheet. No specific limitation is placed on the resins of such sheets, provided that they are transparent in a wavelength range of visible light. Examples of preferred resins include methacrylic resins such as poly(methyl methacrylate) (PMMA), polycarbonate resins or methyl methacrylate - styrene copolymer (MS resin).

The transferred product obtained by transferring the transfer layer onto the surface of the transfer substrate by using the transfer material according to the second aspect of the present invention can be used in a variety of fields according to chemical and physical properties of the transfer layer. For example, it can be advantageously used as a protective sheet for display screens such as rear projection television sets or plasma display panels.

Because the cured resin layer composed of the curable resin composition has been also formed on the surface of transfer substrate in the transfer product according to the second aspect of the present invention, the decision as to whether the requirement of the present invention are satisfied can be made, similarly to the above-described case of the transfer material, by exposing the cured resin layer and then conducting the acetone resistance test and pencil hardness measurements. When the requirements according to the second aspect of the present invention are satisfied, the pencil hardness of the cured resin layer is no less than H and the difference between the haze values before and after acetone coating is within a range of 0.3 to 40.

EXAMPLES

The first and second aspects of the present invention will be described hereinbelow in greater detail based on examples thereof. In the examples, the term "part" stands for "part by weight", unless stated otherwise. Evaluation in the examples was conducted by the following methods.

Method for measuring adhesive strength

The laminated material obtained was heated and adhesively bonded to a resin sheet at a resin sheet temperature of 90°C, a roll temperature of 160°C, and a sheet feed speed of 1 m/min, a 180° peel test was conducted according to JIS K-6854 (1994), and an adhesive strength was measured.

Measurement of pencil hardness

The pencil hardness of the transferred product surface was measured according to JIS K 5600-5-4 (1999).

Measurement of covered surface area

A laminated material was cut to 5 cm $\times$ 5 cm and divided by marking into 100 sections. The number of sections in which the cured resin layer completely covered the film, with no cissing or pinhole formation being observed, was measured and the result was expressed on a percentage basis (%) as the covered surface area.

Measurement of transfer surface area

The rear surface of the transfer material obtained was divided into 100 sections by marking with a maker, the number of sections in which the transfer layer moved to the transfer substrate over the entire divided area was measured (the number of sections in which the completely coated cured resin layer has moved, with no cissing or pinhole formation being observed), and the transfer surface area was expressed on a percentage basis (%).

Further, thermoadhesive polymers used in the examples, except the commercial products, were synthesized by the following methods.

Synthesis example 1. [Preparation of iso-PMMA (Mw 50,000 isotacticity 93%)]

A three-neck flask with a capacity of 300 ml was purged with nitrogen, followed by the addition of 28 ml of toluene, 112 ml of cyclohexane, and 7.4 ml of ether solution (0.77 mole/l) of phenyl magnesium bromide and cooling to a temperature of 10°C.

A total of 30 ml of methyl methacrylate was then dropwise added within 90 minutes, followed by stirring for 6 hours. A total of 0.5 ml of methanol was then added and the reaction was terminated. The reaction liquid was then filtered, the residue was washed with methanol and dried, and iso-PMMA was obtained. The results of GPC measurements showed that the weight-average molecular weight (Mw) was 50,000, and the results of NMR measurements showed that the isotacticity was 93%.

Synthesis example 2 [Synthesis of syn-poly n-butyl methacrylate (PnBMA)]

A three-neck flask with a capacity of 300 ml was purged with nitrogen, followed by the addition of toluene (100 ml), n-butyl methacrylate (100 ml), azoisobutyronitrile (0.02 g), 1-octanethiol (0.18 g), stirring for 8 hours at a temperature of 60°C, and cooling. The reaction liquid was dropwise added to 2000 ml of methanol, the precipitate obtained was dried, and syn-PnBMA was obtained. The Mw (weight-average molecular weight) of syn-PnBMA obtained was 37,000, based on the GPC measurement results. Further, isotacticity was 57% based on the NMR measurement results.

Examples 1 through 7, Comparative Examples 1 and 2

Photocurable resin compositions were prepared by dissolving 20 parts by weight of compositions (parts by weight) shown in Table 6 in a diluting agent composed of 50 parts by weight of toluene and 30 parts by weight of isopropanol, and those compositions were coated with a bar coater to a thickness of 20 $\mu$m on PET films with a thickness of 38 $\mu$m and treated to facilitate adhesion, dried for 30 seconds at a temperature of 140°C, and cured by conducting UV irradiation two times (conveyor speed 1 m/min, distance between the light source and irradiation object 10 cm, manufactured by Ushio Co., Ltd.) to form cured transfer layers (thermoadhesive layers) and to obtain laminated materials.

The laminated materials thus obtained were heated and adhesively bonded to methacrylic resin sheets in the above-described method and adhesive strength was measured by conducting a 180° peel test.

Further, the prepared photocurable resin compositions were coated with a bar coater to a thickness of 20 $\mu$m on methacrylic resin sheets with a thickness of 2 mm, dried for 30 seconds at a temperature of 140°C, and cured by conducting UV irradiation two times (conveyor speed 1 m/min, distance between the light source and irradiation object 10 cm, manufactured by Ushio Co., Ltd.) to obtain laminated sheets. The surface hardness (pencil hardness) was then measured.

Glass transition temperature (Tg) of each polymer shown in Table 6 was measured with a device TA 4000 manufactured by Mettler Co., Ltd.

Table 6

| COMPONENTS | Tg (°C) | EXAMPLES | | | | | | | COMPARATIVE EXAMPLES | |
|---|---|---|---|---|---|---|---|---|---|---|
| | | 1 | 2 | 3 | 4 | 5 | 6 | 7 | 1 | 2 |
| PMMA 1 *[1] | 128 | 25 | 50 | 0 | 15 | 20 | 25 | 16 | 5 | 0 |
| PMMA 2 *[10] | 58 | 0 | 0 | 0 | 0 | 10 | 0 | 9 | 0 | 0 |
| POLYSTYRENE *[2] | 91 | 0 | 0 | 25 | 0 | 0 | 0 | 0 | 0 | 5 |
| POLYURETHANE*[3] | -41,120 | 0 | 0 | 0 | 10 | 0 | 0 | 0 | 0 | 0 |
| EP-MODIFIED BPADA *[4] | - | 50 | 33 | 50 | 50 | 50 | 25 | 25 | 63 | 63 |
| TRIAZINE TRIACRYLATE *[5] | - | 0 | 0 | 0 | 0 | 0 | 10 | 10 | 0 | 0 |
| EP-MODIFIED PHENOXYACRYLATE *[6] | - | 0 | 0 | 0 | 0 | 20 | 20 | 20 | 0 | 0 |
| APTMS *[7] | - | 0 | 0 | 0 | 0 | 0 | 20 | 20 | 0 | 0 |
| DPEHA *[8] | - | 25 | 17 | 25 | 25 | 0 | 0 | 0 | 32 | 32 |
| PHOTOPOLYMERIZATION INITIATOR *[9] | - | 3 | 3 | 3 | 3 | 3 | 3 | 3 | 3 | 3 |
| (Awt)/((Awt) + (Bwt)) | | 0.25 | 0.5 | 0.25 | 0.25 | 0.30 | 0.25 | 0.25 | 0.05 | 0.05 |
| (Bwt)/((Awt) + (Bwt)) | | 0.75 | 0.5 | 0.75 | 0.75 | 0.70 | 0.75 | 0.75 | 0.95 | 0.95 |
| v (mol/L) | | 6.0 | 4.1 | 6.0 | 6.0 | 5.2 | 1.9 | 1.9 | 7.8 | 7.8 |
| δ | | 9.9 | 9.4 | 10.6 | 10.5 | 9.8 | 9.9 | 9.9 | 10.9 | 11.1 |
| ADHESIVE STRENGTH (mN/cm) | | 150 | FRACTURE OF SUBSTRATE MATERIAL | 100 | 50 | 300 | 300 | 300 | 0 | 0 |
| PENCIL HARDNESS | | 3H | 2H | 3H | 3H | H | H | H | 4H | 5H |

EP 1 354 918 B1

Notes for Table 6.
*1 : Trade name: Parapet HR-L, manufactured by Kuraray Co., Ltd. (syndiotacticity 60%).
*2 : Trade name: Polystyrene (degree of polymerization 3000), manufactured by Wako Pure Chemical Industries Co., Ltd.
*3 : Trade name: Kuramiron U 1780, manufactured by Kuraray Co., Ltd.
*4 : Trade name: Viscoat #540, manufactured by Osaka Organic Chemical Industry Co., Ltd.
*5 : Trade name: M315, manufactured by Toagosei Chemical Industry Co., Ltd.
*6 : Trade name: M600A, manufactured by Kyoeisha Chemical Co., Ltd.
*7 : Trade name: KBM5103 (γ-acryloyloxypropyl trimethoxysilane), manufactured by Shin-Etsu Chemical Co., Ltd.
*8 : Trade name: DPHA, manufactured by Nippon Kayaku Co., Ltd.
*9 : Trade name: Irgacure 184, manufactured by Japan Ciba-Geigy Co., Ltd.
*11 : PMMA (Mw 50,000, isotacticity 93%, see Synthesis Example 1).

The results relating to Examples 1 to 7 as shown in Table 6 demonstrate that when a curable resin composition is composed of a thermoadhesive polymer, an ethylenic unsaturated compound, and a photopolymerization initiator and the requirements according to the first aspect of the present invention are satisfied, a coating film can be obtained which shows good adhesive properties and also good surface hardness.

By contrast the results of Comparative Examples 1 and 2 demonstrate that good adhesiveness is not obtained when the requirements according to the first aspect of the present invention are not satisfied.

Example 8

A mixed solution comprising 14 parts by weight of methyltrimethoxysilane (trade name: KBM13, manufactured by Shin-Etsu Chemical Co., Ltd.), 18 parts by weight of colloidal silica (trade name ; MEK-ST, manufactured by Nissan Chemical Industry Co., Ltd.), 0.2 part by weight of acetic acid, and 68 parts by weight of methyl ethyl ketone was coated with a bar coater to a thickness of 20 $\mu$m on a PET film having a thickness of 38 $\mu$m and treated to facilitate adhesion. The coating was dried for 2 minutes at a temperature of 150°C.

Then, a photocurable resin composition comprising 3 parts by weight of PMMA (trade name : Parapet HR-L, manufactured by Kuraray Co., Ltd.), 2 parts by weight of polyurethane (trade name : Kuramiron U 1780, manufactured by Kuraray Co., Ltd., Tg-41°C, 120°C), 10 parts by weight of EP-modified BPADA (trade name: Viscoat #540, manufactured by Osaka Organic Chemical Industry Co., Ltd.), 5 parts by weight of DPEHAD (trade name: DPHA, manufactured by Nippon Kayaku Co., Ltd.), 0.6 part by weight of photopolymerization initiator (trade name: Irgacure 184, manufactured by Japan Ciba-Geigy Co., Ltd.), 49.4 parts by weight of toluene, and 30 parts by weight of isopropanol was coated with a bar coater to a thickness of 20 $\mu$m on the coated surface of PET film obtained in the above-described manner. The coating was dried for 30 seconds at a temperature of 140°C and cured by conducting UV irradiation two times (conveyor speed 1 m/min, distance between the light source and irradiation object 10 cm, manufactured by Ushio Co., Ltd.) to form a thermoadhesive layer composed of a cured resin and to obtain a laminated material.

The laminated material thus obtained was cut to 5 cm × 5 cm and divided by marking into 100 sections, and the covered surface area of the photocurable resin composition was measured. The result was 100%.

The adhesive strength was then measured by a scaled tape method (JIS K 5400) with respect to the laminated material obtained. The result was 0 point out of 10.

The laminated material obtained was then heated and adhesively bonded to a methacrylic resin sheet (sheet temperature 90°C, roll temperature 160°C, sheet feed speed 1 m/min), a 180° peel test (JIS K 6854) was conducted and the adhesive strength of the thermoadhesive cured resin layer was measured. An adhesive strength of 50 mN/cm was obtained.

Example 9

A mixed solution comprising 14 parts by weight of methyltrimethoxysilane (trade name: KBM13, manufactured by Shin-Etsu Chemical Co., Ltd.), 18 parts by weight of colloidal silica (trade name ; MEK-ST, manufactured by Nissan Chemical Industry Co., Ltd.), 0.2 part by weight of acetic acid, and 68 parts by weight of methyl ethyl ketone was coated with a bar coater to a thickness of 20 μm on a PET film having a thickness of 38 μm and treated to facilitate adhesion. The coating was dried for 2 minutes at a temperature of 150°C.

Then, a photocurable resin composition comprising 3 parts by weight of PMMA (trade name : Parapet HR-L, manufactured by Kuraray Co., Ltd.), 2 parts by weight of polyurethane (trade name : Kuramiron U 1780, manufactured by Kuraray Co., Ltd., Tg-41°C, 120°C), 9 parts by weight of EO-modified BPADA (trade name: Viscoat #540, manufactured by Osaka Organic Chemical Industry Co., Ltd.), 5 parts by weight of DPEHA (trade name: DPHA, manufactured by Nippon Kayaku Co., Ltd.), 0.6 part by weight of photopolymerization initiator (trade name: Irgacure 184, manufactured by Japan Ciba-Geigy Co., Ltd.), 1 part by weight of methyltrimethoxysilane (trade name : KBM13, manufactured by Shin-Etsu Chemical Co., Ltd.), 49.4 parts by weight of toluene, and 30 parts by weight of isopropanol was coated with a bar coater to a thickness of 20 μm on the coated surface of PET film obtained in the above-described manner. The coating was dried for 30 seconds at a temperature of 140°C and cured by conducting UV irradiation two times (conveyor speed 1 m/min, distance between the light source and irradiation object 10 cm, manufactured by Ushio Co., Ltd.) to form a thermoadhesive layer composed of a cured resin and to obtain a laminated material.

The covered surface area of the laminated material thus obtained was measured. The result was 100%.

The adhesive strength was then measured by a scaled tape method (JIS K 5400) with respect to the laminated material obtained. The result was 10 points out of 10.

The laminated material obtained was then heated and adhesively bonded to a methacrylic resin sheet (sheet temperature 90°C, roll temperature 160°C, sheet feed speed 1 m/min), a 180° peel test (JIS K 6854) was conducted, and the adhesive strength of the thermoadhesive cured resin layer was measured. An adhesive strength of 30 mN/cm was obtained.

Example 10

A mixed solution comprising 14 parts by weight of methyltrimethoxysilane (trade name: KBM13, manufactured by Shin-Etsu Chemical Co., Ltd.), 18 parts by weight of colloidal silica (trade name ; MEK-ST, manufactured by Nissan Chemical Industry Co., Ltd.), 0.2 part by weight of acetic acid, and 68 parts by weight of methyl ethyl ketone was coated with a bar coater to a thickness of 20 μm on a PET film having a thickness of 38 μm and treated to facilitate adhesion, and the coating was dried for 2 minutes at a temperature of 150°C.

Then, a photocurable resin composition comprising 5 parts by weight of methacrylic resin (trade name : Parapet HR-L, manufactured by Kuraray Co., Ltd.), 4 parts by weight of EP-modified BPADA (trade name: Viscoat #540, manufactured by Osaka Organic Chemical Industry Co., Ltd.), 2 parts by weight of triazine triacrylate (trade name M315, manufactured by Toagosei Chemical Industry Co., Ltd., 4 parts by weight of EP-modified phenoxyacrylate (trade name: M600A, manufactured by Kyoeisha Chemical Co., Ltd.), 4 parts by weight of APTMS (trade name : KBM5103, manufactured by Shin-Etsu Chemical Co., Ltd.), 0.6 part by weight of photopolymerization initiator (trade name: Irgacure 184, manufactured by Japan Ciba-Geigy Co., Ltd.), 1 part by weight of methyltrimethoxysilane (trade name : KBM13, manufactured by Shin-Etsu Chemical Co., Ltd.), 49.4 parts by weight of toluene, and 30 parts by weight of isopropanol was coated with a bar coater to a thickness of 20 μm on the coated surface of PET film obtained in the above-described manner. The coating was dried for 30 seconds at a temperature of 140°C and cured by conducting UV irradiation two times (conveyor speed 1 m/min, distance between the light source and irradiation object 10 cm, manufactured by Ushio Co., Ltd.) to form a thermoadhesive layer composed of a cured resin and to obtain a laminated material.

The covered surface area of the laminated material thus obtained was measured. The result was 100%.

The adhesive strength was then measured by a scaled tape method (JIS K 5400) with respect to the laminated material obtained. The result was 10 points out of 10.

The laminated material obtained was then heated and adhesively bonded to a methacrylic resin sheet (sheet temperature 90°C, roll temperature 160°C, sheet feed speed 1 m/min), a 180° peel test (JIS K 6854) was conducted, and the adhesive strength of the thermoadhesive cured resin layer was measured. An adhesive strength of 50 mN/cm was obtained.

Acetone was then coated by the method described in JIS K 5600-6-1 to a film thickness of 100 μm on the curable resin layer of the laminated film obtained and the coating was allowed to stay at normal temperature until it dried. The difference (AH) between haze values before and after acetone coating was measured. The result was 20.3, the pencil hardness was 2H.

As shown in the above-described Examples 1 through 10, the photocurable resin composition according to the first aspect of the present invention made it possible to obtain a thermal adhesiveness and has a high surface hardness and this adhesive can be advantageously applied to the products such as laminated materials that are used in wallpaper.

Examples 11 - 17 and Comparative Examples 3 - 4

Photocurable resin compositions (photocurable resin compositions identical to those used in Examples 1 through 7 and Comparative Examples 1 to 2) prepared by dissolving 20 parts by weight of compositions (parts by weight) shown in Table 6 in a diluting agent composed of 50 parts by weight of toluene and 30 parts by weight of isopropanol were coated with a bar coater to a thickness of 20 $\mu$m on bidirectionally stretched polyethylene terephthalate films with a thickness of 38 $\mu$m having melamine release layers. The coating was dried for 30 seconds at a temperature of 140°C and cured by conducting UV irradiation two times with a 80W high-pressure mercury lamp (conveyor speed 1 m/min, distance between the light source and irradiation object 10 cm, manufactured by Ushio Co., Ltd.) to form transfer layers composed of a cured resin layer and to obtain transfer materials of Examples 11 through 17 and Comparative Examples 3 and 4.

The transfer layers of transfer materials obtained were thermally transferred onto a methacrylic resin sheet under the following conditions: sheet temperature 90°C, roll temperature 160°C, sheet feed speed 1 m/min, and the transfer surface area and pencil hardness were measured. The results obtained are shown in Table 7. Because there was no transfer in Comparative Examples 3 and 4, the photocurable resin compositions were directly coated on the methacrylic resin sheets to a solid film thickness of 4 $\mu$m and pencil hardness was measured after curing. The results are presented in the parentheses for reference.

Table 7

|  | EXAMPLES | | | | | | | COMPARATIVE EXAMPLES | |
|---|---|---|---|---|---|---|---|---|---|
|  | 11 | 12 | 13 | 14 | 15 | 16 | 17 | 3 | 4 |
| TRANSFER SURFACE AREA (%) | 100 | 100 | 100 | 100 | 100 | 100 | 100 | 0 | 0 |
| PENCIL HARDNESS | 3H | H | 2H | 2H | 2H | H | H | (4H) | (5H) |

The results obtained in Examples 11 through 17 and shown in Table 7 demonstrate that the transfer material comprising a transfer layer composed of a cured resin layer obtained by curing the photocurable resin composition comprising components (A), (B) and (C) makes possible the complete transfer of the transfer layer onto the transferred product. Further; the pencil hardness of the transferred cured resin layer was H to 3H and a good surface hardness was obtained.

By contrast, the results of Comparative Examples 3 and 4 demonstrate that when the values of (Awt)/{(Awt) + (Bwt)} and (Bwt)/{(Awt) + (Bwt)} are outside the range in accordance with the present invention, the transfer layer cannot be transferred at all even when the polymer having thermal adhesiveness of component (A) is contained.

Examples 18 through 21 and Comparative Example 5

A solution comprising 3 parts of silica ultrafine powder (mean particle size 20 nm), 3 parts of methyltriethoxysilane, 0.2 part of acetic acid, 54 parts of isopropyl alcohol, and 40 parts of ethanol was coated by a gravure coating method on a bidirectionally stretched polyethylene terephthalate film with a thickness of 38 $\mu$m and the coating was dried to form a layer of a material with predominantly siloxane bonds and a thickness of 0.09 $\mu$m. Photocurable resin compositions in which 20 parts by weight of the compositions (parts by weight) shown in Table 8 were dissolved in a diluting agent composed of 50 parts by weight of toluene and 30 parts by weight of isopropyl alcohol were coated with a bar coater to a thickness of 20 $\mu$m on the layer of material with predominantly siloxane bonds. The coatings were dried for 30 seconds at a temperature of 140°C and cured by conducting UV irradiation two times with a 80W high-pressure mercury lamp (conveyor speed 1 m/min, distance between the light source and irradiation object 10 cm, manufactured by Ushio Co., Ltd.) to form transfer layers composed of a cured resin layer and to obtain transfer materials.

Wettability (whether "cissing" and "pinholes" have appeared or not) of the cured resin layer with respect to the layer of material with predominantly siloxane bonds (low-refractive layer) was evaluated for the obtained transfer materials by measuring the surface area (%) of the cured resin layer related to the layer of material with predominantly siloxane bonds. The results obtained are shown in Table 8.

Table 8

| COMPONENTS | EXAMPLES | | | | COMPARATIVE EXAMPLE |
|---|---|---|---|---|---|
| | 18 | 19 | 20 | 21 | 5 |
| iso-PMMA *11 | 8 | 8 | 8 | 20 | 0 |
| syn-PMMA *12 | 17 | 0 | 0 | 40 | 0 |
| syn-PMMA *13 | 0 | 17 | 0 | 0 | 0 |
| syn-PnBMA *14 | 0 | 0 | 22 | 0 | 0 |
| EO-MODIFIED BPADA *15 | 50 | 50 | 45 | 30 | 66 |
| DPEHA *16 | 25 | 25 | 25 | 10 | 34 |
| PHOTOPOLYMERIZATION INITIATOR *17 | 3 | 3 | 3 | 3 | 3 |
| (Awt)/{(Awt) + (Bwt)} | 0.25 | 0.25 | 0.25 | 0.6 | 0.0 |
| (Bwt)/{(Awt) + (Bwt)} | 0.75 | 0.75 | 0.75 | 0.4 | 1.0 |
| V (mol/L) | 6.0 | 6.0 | 5.9 | 2.8 | 6.3 |
| $\delta$ (cal/cm$^3$) | 10.3 | 10.3 | 9.7 | 9.7 | 10.1 |
| COVER SURFACE AREA | 100 | 100 | 100 | 100 | 0 |

Notes for Table 8: *11 : iso-PMMA manufactured in Synthesis Example 1, Mw = 50,000, isotacticity 93%.

*12 : Trade name: Parapet HR-L, manufactured by Kuraray Co., Ltd., Mw 100,000, syndiotacticity 60%.

*13 : Trade name: Parapet LW-1000, manufactured by Kuraray Co., Ltd., Mw 38,000, syndiotacticity 60%.

*14 : syn-PnBMA manufactured in Synthesis Example 2, Mw = 37,000, isotacticity 57%.

*15 : Epoxy-modified Bisphenol A diacrylate, trade name: Viscoat #540, manufactured by Osaka Organic Chemical Industry Co., Ltd.

*16 : Dipentaerythritol hexaacrylate, trade name: DPHA, manufactured by Nippon Kayaku Co., Ltd.

*17 : Trade name: Irgacure 184, manufactured by Japan Ciba-Geigy Co., Ltd.

The results of Examples 18 through 21 shown in Table 8 demonstrate that if iso-poly(methyl methacrylate) and syn-poly(methyl methacrylate) are used together as a thermoadhesive polymer, a cured resin layer can be obtained with good coverage ratio even on the surface with low wettability.

By contrast, the results of Comparative Example 5 demonstrate that a surface with low wettability cannot be coated with a cured resin layer, without using a polymer of component (A) having thermal adhesiveness.

Example 22

A solution comprising 3 parts by weight of silica ultrafine powder (mean particle size 20 nm), 3 parts by weight of methyltriethoxysilane, 0.2 part by weight of acetic acid, 54 parts by weight of isopropyl alcohol, and 40 parts by weight of ethanol was coated by a gravure coating method on a bidirectionally stretched polyethylene terephthalate film with a thickness of 38 $\mu$m, which has been subjected to release treatment, and the coating was dried to form a low-refractive layer with a thickness of 0.09 $\mu$m. A solution comprising 2.75 parts by weight of titanium oxide ultrafine powder (mean particle size 20 nm), 1.25 parts by weight of epoxy-modified bisphenol A diacrylate, 0.75 part by weight of triazine triacrylate, 0.25 parts by weight of a photopolymerization initiator, 30 parts by weight of ethanol, 15 parts by weight of isopropanol, 15 parts by weight of butanol, and 35 parts by weight of methyl ethyl ketone was coated with a bar coater on the layer of material with predominantly siloxane bonds thus obtained, dried for 30 seconds at a temperature of 140°C and cured by conducting UV irradiation two times with a 80W high-pressure mercury lamp (conveyor speed 1 m/min, distance between the light source and irradiation object 10 cm, manufactured by Ushio Co., Ltd.) to form a high-refractive layer. Then, the solution of Example 6 (described in Table 3) was coated with a bar coater, dried for 30 seconds at a temperature of 140°C and cured by conducting UV irradiation two times with a 80W high-pressure mercury lamp (conveyor speed 1 m/min, distance between the light source and irradiation object 10 cm, manufactured by Ushio Co., Ltd.) to form a transfer layer composed of a cured resin layer and to obtain a transfer material.

The transfer layer of the transfer material obtained was transferred onto a methacrylic resin sheet under the following conditions: sheet temperature 90°C, roll temperature 160°C, sheet feed speed 1 m/min, and a transferred product having a transfer layer transferred thereonto was obtained. The following results were obtained in evaluating the transferred product: transfer surface area 100%, pencil hardness 2H, minimum reflectivity in visible light range (400 to 700 nm) 0.5%.

The low-refractive layer and high-refractive layer were then removed with a methanol-infiltrated nonwoven fabric. Acetone was thereafter coated by the method described in JIS K 5600-6-1 to a film thickness of 100 $\mu$m and allowed to stay at normal temperature until it dried. The difference (AH) between haze values before and after acetone coating was measured. The result was 1.3, the pencil hardness was 2H.

With the transfer material according to the second aspect of the present invention, the transfer layer can be provided with both the hard coat function and the thermoadhesive function. Further, a homogeneous coating film can be obtained on a substrate material where "cissing" or "pinholes" can easily occur. Therefore, manufacture can be conducted at a low cost. Moreover, because transfer can be conducted with good transfer efficiency, the transferred product can be advantageously manufactured.

**Claims**

1. A curable resin composition comprising the following components (A) to (C) :

    (A) a thermoadhesive polymer;
    (B) an ethylenic unsaturated compound polymerizable by active energy radiation; and
    (C) a polymerization initiator, wherein the relationships represented by the following formulas (1) and (2) are satisfied:

$$0.1 \leq (Awt)/\{(Awt) + (Bwt)\} \leq 0.6 \quad (1)$$

$$0.4 \leq (Bwt)/\{(Awt) + (Bwt)\} \leq 0.9 \quad (2)$$

    where (Awt) stands for a compounded amount (parts by weight) of component (A), and (Bwt) stands for a compounded amount (parts by weight) of component (B),
    wherein the relationship represented by the following formula (3) is further satisfied in said curable resin composition:

$$1 \leq v \leq 6 \quad (3)$$

    where v (mol/L) is the average value of crosslinking density of component (A) and component (B).

2. The curable resin composition according to claim 1, wherein the thermoadhesive polymer of component (A) is a thermoadhesive polymer with a glass transition temperature of no less than 60°C and no higher than 180°C.

3. The curable resin composition according to claim 2, wherein the thermoplastic polymer is a polymer containing methyl methacrylate units as the main component.

4. The curable resin composition according to claim 3, wherein the polymer containing methyl methacrylate units as the main component is a mixture composed of a polymer comprising methyl methacrylate units with an isotacticity of no less than 50% as the main component and a polymer comprising methyl methacrylate units with syndiotacticity of 40 to 80% as the main component.

5. The curable resin composition according to any of claims 1 through 4, further comprising a component (D) which is a silane compound represented by the following chemical formula (I):

$$R_nSiX_{4-n} \qquad (I)$$

where R is hydrogen atom, alkyl group, aryl group, an organic group comprising a carbon - carbon double bond, or an organic group comprising an epoxy group; when two or three R are present, they may be same or different, X is hydroxyl group, alkoxyl group, alkoxyalkoxyl group or halogen atom; when two or three X are present, they may be same or different, and n is integer of 1 to 3.

6. A method for the manufacture of a laminate in which a cured resin layer is formed on a substrate, this method comprising the following steps (a) and (b) of:

(a) forming a coating film composed of the curable resin composition of any of claims 1 through 5 on a substrate material; and
(b) forming a cured resin layer with thermal adhesiveness by irradiating the coating film composed of the curable resin composition thus obtained with active energy radiation, thereby polymerizing the ethylenic unsaturated compound of component (B) contained in the coating film composed of the curable resin composition.

7. A laminate in which at least one cured resin layer is formed on the substrate obtained by the manufacturing method of claim 6.

8. A transfer material comprising a release base film and a transfer layer provided thereon, wherein said transfer layer comprises at least one thermoadhesive cured resin layer composed of the curable resin composition of any of claims 1 through 5, and a layer of the cured resin layer is disposed on the outermost surface on the side opposite to the release base film.

9. The transfer material according to claim 8, wherein the transfer layer comprises an antireflective layer.

10. The transfer material according to claim 8 or 9, wherein the transfer layer comprises a layer of a material with predominantly siloxane bonds.

11. A method for the manufacture of a transfer material comprising a release base film and a transfer layer comprising at least one cured resin layer provided on the release base film, the method comprising the following steps (a') and (b') of:

(a') forming a film of the curable resin composition of any of claims 1 through 5 on the release base film; and
(b') forming a thermoadhesive cured resin layer by irradiating the film of the curable resin composition thus obtained with active energy radiation.

12. A transferred product obtained by transferring the transfer layer of the transfer material of any of claims 8 through 11 onto the surface of a transfer substrate.


**Patentansprüche**

1. Härtbare Harzzusammensetzung, umfassend die folgenden Komponenten (A) bis (C):

(A) ein thermohaftfähiges Polymer,
(B) eine ethylenisch ungesättigte Verbindung, welche durch aktive Energiestrahlung polymerisierbar ist, und
(C) einen Polymerisationsinitiator,

wobei die durch die folgenden Formeln (1) und (2) dargestellten Beziehungen erfüllt sind:

$$0{,}1 \le (Awt) / \{(Awt) + (Bwt)\} \le 0{,}6 \qquad (1)$$

$$0{,}4 \leq (Awt) \,/\, \{(Awt) + (Bwt)\} \leq 0{,}9 \qquad (2)$$

wobei (Awt) für eine in der Mischung enthaltene Menge (Gewichtsteile) an Komponente (A) steht, und (Bwt) für eine in der Mischung enthaltene Menge (Gewichtsteile) an Komponente (B) steht,
wobei ferner die durch die folgende Formel (3) dargestellte Beziehung in der härtbaren Harzzusammensetzung erfüllt ist:

$$1 \leq v \leq 6 \qquad (3)$$

wobei v (mol/L) der mittlere Wert der Vernetzungsdichte von Komponente (A) und Komponente (B) ist.

2.  Härtbare Harzzusammensetzung nach Anspruch 1, wobei das thermohaftfähige Polymer von Komponente (A) ein thermohaftfähiges Polymer mit einer Glasübergangstemperatur von nicht weniger als 60°C und nicht höher als 180°C ist.

3.  Härtbare Harzzusammensetzung nach Anspruch 2, wobei das thermoplastische Polymer ein Polymer ist, welches Methylmethacrylat-Einheiten als die Hauptkomponente enthält.

4.  Härtbare Harzzusammensetzung nach Anspruch 3, wobei das Polymer, welches Methylmethacryl-Einheiten als die Hauptkomponente enthält, ein Gemisch ist, welches aus einem Polymer, umfassend Methylmethacrylat-Einheiten mit einer Isotaktizität von nicht weniger als 50% als die Hauptkomponente, und einem Polymer, umfassend Methylmethacrylat-Einheiten mit einer Syndiotaktizität von 40 bis 80% als die Hauptkomponente, aufgebaut ist.

5.  Härtbare Harzzusammensetzung nach einem der Ansprüche 1 bis 4, welche ferner eine Komponente (D) umfasst, welche eine durch die folgende chemische Formel (I) dargestellte Silanverbindung ist:

$$R_nSiX_{4-n} \qquad (I)$$

wobei R ein Wasserstoffatom, eine Alkylgruppe, eine Arylgruppe, eine organische Gruppe, welche eine Kohlenstoff-Kohlenstoff-Doppelbindung umfasst, oder eine organische Gruppe, welche eine Epoxygruppe umfasst, ist; wenn zwei oder drei R vorhanden sind, können diese gleich oder verschieden sein; X ist eine Hydroxylgruppe, eine Alkoxylgruppe, eine Alkoxyalkoxylgruppe oder ein Halogenatom; wenn zwei oder drei X vorhanden sind, können diese gleich oder verschieden sein; und n ist eine ganze Zahl von 1 bis 3.

6.  Verfahren für die Herstellung eines Laminats, in welchem eine gehärtete Harzschicht auf einem Substrat gebildet wird, wobei dieses Verfahren die folgenden Schritte (a) und (b) umfasst:

    (a) das Bilden eines Beschichtungsfilms, welcher aus der härtbaren Harzzusammensetzung nach einem der Ansprüche 1 bis 5 aufgebaut ist, auf einem Substratmaterial, und
    (b) das Bilden einer gehärteten Harzschicht mit thermischer Haftfähigkeit durch Bestrahlen des **dadurch** erhaltenen, aus der härtbaren Harzzusammensetzung aufgebauten Beschichtungsfilms mit aktiver Energiestrahlung, wodurch die in dem aus der härtbaren Harzzusammensetzung aufgebauten Beschichtungsfilm enthaltene, ethylenisch ungesättigte Verbindung von Komponente (B) polymerisiert wird.

7.  Laminat, in welchem mindestens eine gehärtete Harzschicht auf dem Substrat gebildet wird, erhalten durch das Herstellungsverfahren nach Anspruch 6.

8.  Transfermaterial, umfassend eine Trennbasisfolie und eine darauf angeordnete Transferschicht, wobei die Transferschicht mindestens eine thermohaftfähige, gehärtete Harzschicht umfasst, welche aus der härtbaren Harzzusammensetzung nach einem der Ansprüche 1 bis 5 aufgebaut ist, und wobei eine Schicht der gehärteten Harzschicht auf der äußersten Oberfläche auf der der Trennbasisfolie gegenüberliegenden Seite aufgebracht ist.

9.  Transfermaterial nach Anspruch 8, wobei die Transferschicht eine Antireflexionsschicht umfasst.

**10.** Transfermaterial nach Anspruch 8 oder 9, wobei die Transferschicht eine Schicht eines Materials mit überwiegend Siloxanbindungen umfasst.

**11.** Verfahren für die Herstellung eines Transfermaterials, umfassend eine Trennbasisfolie und eine Transferschicht, umfassend mindestens eine gehärtete Harzschicht, welche auf der Trennbasisfolie angeordnet ist, wobei das Verfahren die folgenden Schritte (a') und (b') umfasst:

(a') das Bilden eines Films der härtbaren Harzzusammensetzung nach einem der Ansprüche 1 bis 5 auf der Trennbasisfolie, und

(b') das Bilden einer thermohaftfähigen, gehärteten Harzschicht durch Bestrahlen des Films der **dadurch** erhaltenen, härtbaren Harzzusammensetzung mit aktiver Energiestrahlung.

**12.** Übertragenes Produkt, erhalten durch Übertragen der Transferschicht des Transfermaterials nach einem der Ansprüche 8 bis 11 auf die Oberfläche eines Transfersubstrates.

## Revendications

**1.** Composition de résine durcissable comprenant les éléments (A) à (C) suivants :

(A) un polymère thermoadhésif ;
(B) un composé éthyléniquement insaturé, qui est polymérisable par une radiation énergétique active ; et
(C) un initiateur de polymérisation ;

dans laquelle les relations (1) et (2) suivantes sont satisfaites :

$$0,1 \leq (\text{Awt}) / \{(\text{Awt}) + (\text{Bwt})\} \leq 0,6 \qquad (1)$$

$$0,4 \leq (\text{Bwt}) / \{(\text{Awt}) + (\text{Bwt})\} \leq 0,9 \qquad (2)$$

où (Awt) désigne une quantité combinée (exprimée en parties en poids) du composant (A), et (Bwt) désigne une quantité combinée (exprimée en parties en poids) du composant (B),
dans laquelle la relation (3) qui suit est en outre satisfaite dans ladite résine durcissable :

$$1 \leq v \leq 6 \qquad (3)$$

où v (exprimé en mol/L) est la valeur moyenne de densité de réticulation du composant (A) et du composant (B).

**2.** Composition de résine durcissable suivant la revendication 1, dans laquelle le polymère thermoadhésif du composant (A) est un polymère thermoadhésif ayant une température de transition vitreuse non inférieure à 60 ° C et non supérieure à 180 °C.

**3.** Composition de résine durcissable suivant la revendication 2, dans laquelle le polymère thermoplastique est un polymère contenant des unités méthacrylate de méthyle en tant que composant principal.

**4.** Composition de résine durcissable suivant la revendication 3, dans laquelle le polymère contenant des unités méthacrylate de méthyle en tant que composant principal est un mélange composé d'un polymère comprenant des unités méthacrylate de méthyle avec une isotacticité non inférieure à 50 % en tant que produit principal et d'un polymère comprenant des unités méthacrylate de méthyle avec une syndiotacticité de 40 à 80 % en tant que produit principal.

**5.** Composition de résine durcissable suivant l'une quelconque des revendications 1 à 4, comprenant en outre un composant (D) qui est un composé silane représenté par la formule chimique (I) suivante :

$$R_nSiX_{4-n} \qquad (I)$$

dans laquelle R est l'atome d'hydrogène, un groupe alkyle, un groupe aryle, un groupe organique comprenant une double liaison carbone-carbone, ou un groupe organique comprenant un groupe époxy ; quand deux ou trois R sont présents, ils peuvent être identiques ou différents, X est un groupe hydroxyle, un groupe alkoxy, un groupe alkoxyalkoxy ou un atome d'halogène ; quand deux ou trois X sont présents, ils peuvent être identiques ou différents, et n est un nombre entier ayant pour valeur 1 à 3.

6.  Procédé pour la fabrication d'un lamifié dans lequel une couche de résine durcie est formée sur un substrat, ledit procédé comprenant les étapes (a) et (b) suivantes :

    (a) formation d'un film de revêtement, composé de la composition de résine durcissable selon l'une quelconque des revendications 1 à 5, sur un matériau substrat ; et
    (b) formation d'une couche de résine durcie avec adhésivité thermique par irradiation du film de revêtement composé de la composition de résine durcissable résultant, au moyen d'une radiation énergétique active, en polymérisant le composé éthyléniquement insaturé du composant (B) contenu dans le film de revêtement composé de la composition de résine durcissable.

7.  Lamifié dans lequel au moins une couche de résine durcie est formée sur le substrat, ledit lamifié étant obtenu selon le procédé de préparation de la revendication 6.

8.  Matériau de transfert comprenant un film de base de libération et une couche de transfert disposée dessus, dans lequel ladite couche de transfert comprend au moins une couche de résine thermoadhésive durcie composée de la composition de résine durcissable de l'une quelconque des revendications 1 à 5, et une couche de résine durcie est disposée sur la surface extérieure (en anglais : "outermost") du côté opposé au film de base de libération.

9.  Matériau de transfert suivant la revendication 8, dans lequel la couche de transfert comprend une couche antiréflexive.

10. Matériau de transfert suivant la revendication 8 ou 9, dans lequel la couche de transfert comprend une couche d'un matériau avec des liaisons siloxane prédominantes.

11. Procédé pour la préparation d'un matériau de transfert comprenant un film de base de libération et une couche de transfert comprenant au moins une couche de résine durcie disposée sur le film de base de libération, ledit procédé comprenant les étapes (a') et (b') suivantes :

    (a') formation d'un film de la composition de résine durcissable de l'une quelconque des revendications 1 à 5 sur un film de base de libération ; et
    (b') formation d'une couche de résine durcie par irradiation du film de la composition de résine durcissable résultant au moyen d'une radiation énergétique active.

12. Produit transféré obtenu par transfert de la couche du matériau de transfert selon l'une quelconque des revendications 8 à 11 sur la surface d'un substrat de transfert.